# EUROPEAN PATENT APPLICATION

(11) **EP 4 632 025 A2**
(43) Date of publication of application: **15.10.2025**
(21) Application number: 25192638.2
(22) Date of filing: 06.06.2023
(51) Int. Cl.: C09D 195/00

(54) **STYRENE-BUTADIENE LATEXES FOR ASPHALT EMULSION APPLICATIONS**

(30) Priority: 22.06.2022 US 202263354246 P
(62) Divisional of application: 23738949.9
(71) Applicant: BASF SE, 67056 Ludwigshafen am Rhein (DE)
(72) Inventor: AVRAMIDIS, Kostas S., Charlotte, 28273 (US); KIRK, William J., Charlotte, 28273 (US)
(74) Representative: Maiwald GmbH

(57) **Abstract**

Disclosed herein are compositions comprising asphalt emulsion compositions with styrene-butadiene latexes. The present disclosure also relates to methods of making the disclosed compositions. The compositions disclosed herein can be used in a variety of applications including, but not limited to, asphalt compositions, paints, coatings, carpet compositions, paper binding and coating compositions, tack coats, foams, or adhesives.

## Description

### FIELD OF THE DISCLOSURE

The present disclosure relates generally to asphalt emulsion compositions, and more particularly to asphalt compositions that include a styrene-butadiene rubber (SBR) latex polymer, and to methods of making and using the polymer-modified asphalt emulsions.

### BACKGROUND

Asphalt compositions have a wide number of applications, including but not limited to the production of aggregate pavement. The properties of asphalt may be improved by the incorporation of a styrene-butadiene latex polymer. Styrene-butadiene latex particles require flipping of the particle charge, i.e., the conversion of the negative charge to a positive charge, to be compatible with the cationic surfactants used in cationic asphalt emulsion manufacturing. Additionally, certain SBR modified emulsions have high aggregate loss due to slow asphalt droplet breaking. There is a need for asphalt compositions with better adhesion to aggregates, setting times, and viscosity suitable for good workability. The compositions and methods described herein address these and other needs.

### SUMMARY OF THE DISCLOSURE

Disclosed herein are compositions comprising styrene-butadiene latexes. In some embodiments, the polymer comprises styrene and butadiene and is a styrene-butadiene copolymer, such as a non-carboxylated styrene-butadiene copolymer. The composition can be an aqueous dispersion or emulsion. The compositions comprise styrene-butadiene latexes that can be polymerized at a high temperature, e.g., greater than 40°C or styrene-butadiene latexes that are blends of styrene-butadiene latexes polymerized at a high temperature, e.g., greater than 40C and styrene-butadiene latexes polymerized at a low temperature at less than 40°C, e.g., at 5 to 25°C. The compositions can have a butadiene/styrene monomer weight ratio of 75/25. The styrene-butadiene latex does not require charge flipping for use in polymer modified cationic asphalt emulsions. As a result, the styrene-butadiene latexes disclosed herein are significantly more economical than cationic SBR latexes that require cationic surfactants for the manufacture of cationic asphalt emulsions.

Also disclosed herein are compositions comprising asphalt and a styrene-butadiene latex. The compositions can further comprise water and be in the form of a dispersion or emulsion comprising asphalt and the styrene-butadiene latex.

Also disclosed herein are paints, coatings, paper bindings or coatings, foams, adhesives, powders, carpet compositions, tack coats, and asphalt compositions comprising the compositions disclosed herein. In some embodiments, the asphalt compositions disclosed herein have glass transition temperatures significantly higher compared to styrene-butadiene rubber latexes used in cationic asphalt emulsions.

Also disclosed herein are methods of preparing the compositions disclosed herein. The details of one or more embodiments are set forth in the description below. Other features, objects, and advantages will be apparent from the description, the figures, and the claims.

### BRIEF DESCRIPTION OF THE DRAWINGS

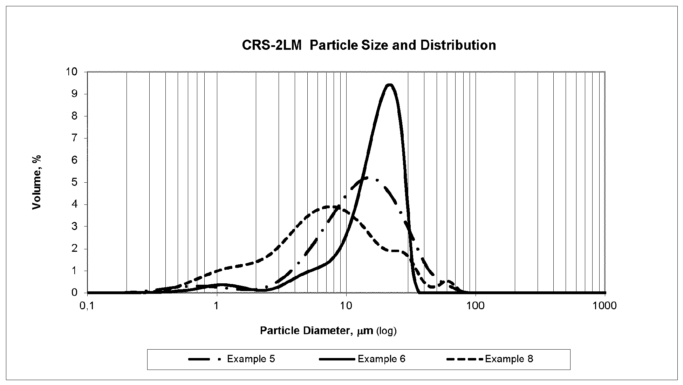

**Figure 1** provides the particle size and distribution for asphalt emulsions made with Example 2 & Example 3 without the use of cationic flipping surfactants to impart positive charge to latex particles.

### DETAILED DESCRIPTION

Disclosed herein are asphalt emulsion compositions comprising styrene-butadiene latexes. In some embodiments, the polymer styrene-butadiene latex is derived from styrene in an amount of 90% to 10% by weight (e.g., 90% or lower, 85% or lower, 80% or lower, 75% or lower, 70% or lower, 65% or lower, 60% or lower, 55% or lower, 45% or greater, 40% or greater, 35% or greater, 30% or greater, 25% or greater, 20% or greater 15% or greater, 10% or greater, or within any range encompassed by these endpoints.) The polymer can be derived from, in some embodiments, butadiene in an amount of 10% to 90% by weight (e.g., 10% or greater, 15% or greater, 20% or greater, 25% or greater, 30% or greater, 35% or greater, 40% or greater, 45% or greater, 55% or lower, 60% or lower, 65% or lower, 70% or lower, 75% or lower, 80% or lower, 85% or lower, 90% or lower, or within any range encompassed by these endpoints.

The latex copolymer is non-carboxylated and does not include acid monomer units. The copolymer can be derived from only styrene and butadiene monomers or can be derived from other monomers, i.e., include other monomer units. In some embodiments, the copolymer includes 10% or less by weight of other monomer units. For example, the copolymer can include at least one additional conjugated diene monomer (e.g., isoprene) or natural rubber. The copolymer can also include at least one additional vinyl aromatic monomer such as alphamethylstyrene or o-chlorostyrene. Other suitable monomers include acrylonitrile, methacrylonitrile, acrylamide, and methacrylamide. In some embodiments, the one or more additional monomers can include at least one (meth)acrylic acid ester. For example, methyl, ethyl, n-butyl, isobutyl and 2-ethylhexyl acrylates and methacrylates can be used.

As the copolymer is non-carboxylated and free of acid monomer units, commonly used cationic flipping surfactants for modifying the charge of the copolymer dispersion to be cationic are not necessary. Examples of these cationic flipping surfactants include REDICOTE.RTM. E-5 (Akzo Nobel, Chicago, Ill.), REDICOTE.RTM. E-11 (Akzo Nobel, Chicago, Ill.), REDICOTE.RTM. E-53 (Akzo Nobel, Chicago, Ill.), REDICOTE.RTM. E-606 (Akzo Nobel, Chicago, Ill.), REDICOTE.RTM. E-5127 (Akzo Nobel, Chicago, Ill.), ADOGEN.RTM. 477HG (Chemtura Corp., Greenwich, Conn.), INDULIN.RTM. W-1 (MeadWestvaco, Charleston, S.C.), INDULIN.RTM. W-5 (MeadWestvaco, Charleston, S.C.), INDULIN.RTM. SBT (MeadWestvaco, Charleston, S.C.), and INDULIN.RTM. MQK (MeadWestvaco, Charleston, S.C.), TETRONIC.TM. and PLURONIC.TM. (BASF Corporation), nonyl phenol ethoxylates, octylphenol ethoxylates, dodecyl phenol ethoxylates, linear alcohol ethoxylates, branched alcohol ethoxylates such as tridecyl alcohol ethoxylates, alcohol ethoxylates, block copolymers, PEG esters and castor oil ethoxylates.

The compositions disclosed herein can be prepared by any polymerization method known in the art. In some embodiments, the compositions disclosed herein are prepared by a dispersion, a mini-emulsion, or an emulsion polymerization. The compositions disclosed herein can be prepared, for instance, by polymerizing the styrene, butadiene, and optionally other monomers using free-radical emulsion polymerization. In some embodiments, the polymerization medium is an aqueous medium. Solvents other than water can be used in the emulsion. The emulsion polymerization can be carried out either as a batch, semi-batch, or continuous process. In some embodiments, a portion of the monomers can be heated to the polymerization temperature and partially polymerized, and the remainder of the polymerization batch can be subsequently fed to the polymerization zone continuously, in steps or with superposition of a concentration gradient. The process can use a single reactor or a series of reactors as would be readily understood by those skilled in the art. For example, a review of heterophase polymerization techniques is provided in M. Antonelli and K. Tauer, Macromol. Chem. Phys. 2003, vol. 204, p 207-19.

The polymer dispersion can be prepared by first charging a reactor with a seed latex, water, the monomers, and optionally at least one nonionic surfactant. The seed latex, although optional, helps initiate polymerization and helps produce a polymer having a consistent particle size. Any seed latex appropriate for the specific monomer reaction can be used such as a polystyrene seed. The initial charge can also include a chelating or complexing agent such as ethylenediamine tetraacetic acid (EDTA). Other compounds such as buffers can be added to the reactor to provide the desired pH for the emulsion polymerization reaction. For example, bases or basic salts such as KOH or tetrasodium pyrophosphate can be used to increase the pH whereas acids or acidic salts can be used to decrease the pH. The initial charge can then be heated to a temperature at or near the reaction temperature. The reaction temperature can be, for example, from 5°C to 100°C (e.g., from 40°C to 90°C, from 50°C to 85°C, or from 55°C to 80°C).

After the initial charge, the monomers that are to be used in the polymerization can be continuously fed to the reactor in one or more monomer feed streams. The monomers can be supplied as a pre-emulsion in an aqueous medium, particularly if acrylate monomers are used in the polymerization. An initiator feed stream can be also continuously added to the reactor at the time the monomer feed stream is added although it may also be desirable to include at least a portion of the initiator solution to the reactor before adding a monomer pre-emulsion if one is used in the process. The monomer and initiator feed streams are typically continuously added to the reactor over a predetermined period of time (e.g., 1.5-15 hours) to cause polymerization of the monomers and to thereby produce the polymer dispersion. A nonionic and/or anionic surfactant can be added at this time as part of either the monomer stream or the initiator feed stream although they can be provided in a separate feed stream. Furthermore, one or more buffers can be included in either the monomer or initiator feed streams or provided in a separate feed stream to modify or maintain the pH of the reactor.

The monomers can be fed in one or more feed streams with each stream including one or more of the monomers being used in the polymerization process. For example, styrene and butadiene (when used) can be provided in separate monomer feed streams or can be added as a pre-emulsion. It can also be advantageous to delay the feed of certain monomers to provide certain polymer properties or to provide a layered or multiphase structure (e.g., a core/shell structure).

The molecular weight of the copolymers can be adjusted by adding a small amount of molecular weight regulators, for example, 0.01 to 4% by weight, based on the monomers being polymerized. Particular regulators which can be used include organic thio compounds (e.g., tert-dodecylmercaptan), allyl alcohols and aldehydes.

The initiator feed stream can include at least one initiator or initiator system that is used to cause the polymerization of the monomers in the monomer feed stream. The initiator stream can also include water and other desired components appropriate for the monomer reaction to be initiated. The initiator can be any initiator known in the art for use in emulsion polymerization such as azo initiators; ammonium, potassium or sodium persulfate; or a redox system that typically includes an oxidant and a reducing agent. Commonly used redox initiation systems are described, e.g., by A.S. Sarac in Progress in Polymer Science 24, 1149-1204 (1999). Exemplary initiators include azo initiators and aqueous solutions of sodium persulfate. The initiator stream can optionally include one or more buffers or pH regulators.

In addition to the monomers and initiator, an anionic or nonionic surfactant (i.e., emulsifier) such as those described herein can be fed to the reactor. The surfactant can be provided in the initial charge of the reactor, provided in the monomer feed stream, provided in an aqueous feed stream, provided in a pre-emulsion, provided in the initiator stream, or a combination thereof. The surfactant can also be provided as a separate continuous stream to the reactor. The surfactant can be provided in an amount of 1%-5% by weight, based on the total weight of monomer and surfactant. In some embodiments, the surfactant is provided in an amount less than 2% by weight.

Once polymerization is completed, the polymer dispersion can be chemically stripped thereby decreasing its residual monomer content. This stripping process can include a chemical stripping step and/or a physical stripping step. In some embodiments, the polymer dispersion is chemically stripped by continuously adding an oxidant such as a peroxide (e.g., t-butylhydroperoxide) and a reducing agent (e.g., sodium acetone bisulfite), or another redox pair to the reactor at an elevated temperature and for a predetermined period of time (e.g., 0.5 hours). Suitable redox pairs are described by A.S. Sarac in Progress in Polymer Science 24, 1149-1204 (1999). An optional defoamer can also be added if needed before or during the stripping step. In a physical stripping step, a water or steam flush can be used to further eliminate the non-polymerized monomers in the dispersion. Once the stripping step is completed, the pH of the polymer dispersion can be adjusted and a biocide or other additives can be added. Cationic, anionic, and/or amphoteric surfactants or polyelectrolytes may optionally be added after the stripping step or at a later time if desired in the end product to provide a cationic or anionic polymer dispersion.

Once the polymerization reaction is complete, and the stripping step is completed, the temperature of the reactor can be reduced.

The styrene-butadiene composition of the present invention can comprise an additional styrene-butadiene copolymer that is polymerized at a low temperature, e.g. less than 40°C, e.g., at 5 to 25°C. The additional styrene-butadiene copolymer can have a styrene to butadiene monomer weight ratio such as those described above for the high temperature styrene-butadiene copolymers described herein or can have a styrene to butadiene monomer weight ratio such as those of SBR latexes. The additional styrene-butadiene copolymer can also include additional monomers such as those described above for the high temperature styrene-butadiene copolymers described herein. The additional styrene-butadiene copolymer could also include acid monomer units, although low temperature SBR's will typically not include acid monomer units. In some examples, the additional styrene-butadiene copolymer can be crosslinked or cured using a sulfur curing agent. The additional styrene-butadiene copolymer can include cis-1,4 butadiene units in an amount less than 20% and trans-1,4 butadiene units in an amount greater than 60% of the total number of butadiene units in the copolymer. The additional styrene-butadiene copolymer can have a higher gel content (e.g., greater than 25%) and can have a soluble portion that has a weight-average molecular weight, as measured by Gel Permeation Chromatography (GPC), of greater than 400,000 g/mol, greater than 450,000 g/mol, or greater than 500,000 g/mol.

The high temperature polymerized styrene-butadiene copolymer can be prepared by polymerizing styrene and butadiene monomers in an aqueous emulsion polymerization reaction at a temperature greater than 40°C, greater than 50°C, or greater than 60°C or at a temperature less than 100°C, less than 90°C or less than 80°C. The high temperature polymerized styrene-butadiene copolymer can be produced using either a continuous, semi-batch (semi-continuous) or batch process. In some examples, the high temperature polymerized styrene-butadiene copolymer is produced using a continuous method by continuously feeding one or more monomer streams, a surfactant stream and an initiator stream to one or more reactors. The monomers in the one or more monomer streams can be fed at the desired butadiene to styrene weight ratio. A seed latex can also be initially charged to the reactor. In some embodiments, the polymerizing method using the high temperature polymerized styrene-butadiene copolymer can be produced using a single stage polymerization, e.g., through the use of a single reactor. In addition, uniform copolymer particles can be produced (and not block copolymers).

The surfactant stream includes a surfactant and water and can, in some embodiments, be combined with the initiator stream. The surfactant in the emulsion stream can be a synthetic or natural surfactant. For example, the surfactant can be a natural surfactant such as sodium or potassium oleate or the sodium or potassium salt of rosin acid. The surfactant can be present in the reactor in an amount from 0.5 to 5 weight percent, based on total monomer weight.

At a polymerization temperature of 70°C or greater, a thermal initiator can be used in the reactor such as ammonium persulfate, potassium persulfate, or sodium persulfate. At temperatures of less than 70°C, the thermal initiator can be combined with or replaced by a redox initiator comprising a free radical generator, a reducing agent and an activator (e.g., a water-soluble metal salt).

Suitable free radical generators include organic peroxygen compounds such as benzoyl peroxide, hydrogen peroxide, di-t-butyl peroxide, dicumyl peroxide, 2,4-dichlorobenzoyl peroxide, decanoyl peroxide, lauroyl peroxide, diisopropylbenzene hydroperoxide, cumene hydroperoxide, p-methane hydroperoxide, alpha-pinene hydroperoxide, t-butyl hydroperoxide, acetyl acetone peroxide, methyl ethyl ketone peroxide, succinic acid peroxide, dicetyl peroxydicarbonate, t-butyl peroxyacetate, t-butyl peroxymaleic acid, t-butyl peroxybenzoate, and the like; and alkyl perketals, such as 2,2-bis-(t-butylperoxy)butane, ethyl 3,3-bis(t-butylperoxy)butyrate, or 1,1-di-(t-butylperoxy)cyclohexane. In some embodiments, the free radical generator includes diisopropylbenzene hydroperoxide or p-methane hydroperoxide. The free radical generator is typically present in an amount between 0.01 and 1% by weight based on total monomer weight.

Suitable reducing agents for use in the initiator stream include sulfur dioxide; alkali metal disulfites; alkali metal and ammonium hydrogen sulfites; thiosulfate, dithionite and formaldehyde sulfoxylates; hydroxylamine hydrochloride; hydrazine sulfate; glucose and ascorbic acid. For example, the reducing agent can include sodium formaldehyde sulfoxylate dihydrate (SFS), sodium metabisulfite, or a mixture thereof. The reducing agent can be present in an amount between 0.01 and 1% by weight based on total monomer weight. In addition, the weight ratio of reducing agent to free radical generator can be between 0.2:1 and 1:1.

The water-soluble metal salt can be an iron, copper, cobalt, nickel, tin, titanium, vanadium, manganese, chromium or silver salt and can be chosen from a wide variety of water-soluble metal salts. Suitable water-soluble metal salts include copper (II) amine nitrate, copper (II) metaborate, copper (II) bromate, copper (II) bromide, copper perchlorate, copper (II) dichromate, copper (II) nitrate hexahydrate, iron (II) acetate, iron (III) bromide, iron (III) bromide hexahydrate, iron (II) perchlorate, iron (III) dichromate, iron (III) formate, iron (III) lactate, iron (III) malate, iron (III) nitrate, iron (III) oxalate, iron (II) sulfate pentahydrate, cobalt (II) acetate, cobalt (II) benzoate, cobalt (II) bromide hexahydrate, cobalt (III) chloride, cobalt (II) fluoride tetrahydride, nickel hypophosphite, nickel octanoate, tin tartrate, titanium oxalate, vanadium tribromide, silver nitrate, and silver fluosilicate. The metal can also be complexed with a compound, such as ethylenediaminetetraacetic acid (EDTA) to increase its solubility in water. For example, iron/EDTA complexes or cobalt/EDTA complexes can be used. The water-soluble metal salt can be present in an amount less than 0.01% by weight based on total monomer weight.

The polymerization reaction can be conducted in the presence of molecular weight regulators to reduce the molecular weight of the copolymer. Suitable molecular weight regulators include C₈ to C₁₂ mercaptans, such as octyl, nonyl, decyl or dodecyl mercaptans. In some embodiments, tert-dodecyl mercaptan is used as a molecular weight regulator. The amount of tert-dodecyl mercaptan used will depend upon the molecular weight that is desired for the copolymer. In some embodiments, the amount of molecular weight regulator is from 0.01 and 4% by weight (e.g., 0.1 to 1% by weight) based on total monomer weight.

The one or more monomer feeds, surfactant feed and initiator feed can be separately fed to a reactor where polymerization of the styrene and butadiene monomers occurs. The polymer content of the styrene-butadiene compositions of the present invention can be in the 30-75% range.

Once the desired level of conversion is reached, the polymerization reaction can be terminated by the addition of a shortstop to the reactor. The shortstop reacts rapidly with free radicals and oxidizing agents, thus destroying any remaining initiator and polymer free radicals and preventing the formation of new free radicals. Exemplary shortstops include organic compounds possessing a quinonoid structure (e.g., quinone) and organic compounds that may be oxidized to a quinonoid structure (e.g., hydroquinone), optionally combined with water soluble sulfides such as hydrogen sulfide, ammonium sulfide, or sulfides or hydrosulfides of alkali or alkaline earth metals; N-substituted dithiocarbamates; reaction products of alkylene polyamines with sulfur, containing presumably sulfides, disulfides, polysulfides and/or mixtures of these and other compounds; dialkylhydroxylamines; N,N'-dialkyl-N,N'-methylenebishydroxylamines; dinitrochlorobenzene; dihydroxydiphenyl sulfide; dinitrophenylbenzothiazyl sulfide; and mixtures thereof. In some embodiments, the shortstop is hydroquinone or potassium dimethyl dithiocarbamate. The shortstop can be added in an amount between 0.01 and 0.1% by weight based on total monomer weight. However, the high temperature polymerization can be allowed to continue until complete monomer conversion, i.e., greater than 99%, in which case a shortstop may not be employed.

As mentioned above, the high temperature polymerized styrene-butadiene copolymer can also be produced using a batch process. In the batch process, the monomers, the surfactant, the free radical generator and water are all added to a reactor and agitated. After reaching the desired polymerization temperature, an activator solution if desired, that includes the reducing agent and the water-soluble metal salt if desired can be added to initiate polymerization.

If a semi-batch process is used, the monomers, the surfactant in an aqueous solution, and the free radical generator in an aqueous solution are all fed to a reactor over a period of time, usually from 3 to 20 hours. If desired, an activator solution that includes a reducing agent and/or a water-soluble metal salt can also be added in the reactor prior to commencing the other feeds or can be fed over a time interval to the reactor. The high temperature polymerized styrene-butadiene copolymer is preferably allowed to complete monomer conversion, i.e., greater than 99%, in which case a shortstop may not be employed. However, a shortstop, if desired, can be added to terminate the polymerization if the desired conversion level is less than 99%.

Once polymerization is terminated (in either the continuous, semi-batch or batch process), the unreacted monomers can be removed from the latex dispersion. For example, the butadiene monomers can be removed by flash distillation at atmospheric pressure and then at reduced pressure. The styrene monomers can be removed by steam stripping in a column.

The additional styrene-butadiene latex can be an SBR copolymer dispersion that can be agglomerated, e.g., using chemical, freeze or pressure agglomeration, and water removed to produce a solids content of greater than 50% to 75%. In some embodiments, the solids content is 55% or greater, 60% or greater, or 65% or greater. As described above, the high temperature styrene-butadiene copolymer dispersion can be blended with an additional SBR copolymer dispersion prior to agglomeration. The agglomerated particles result in a polymer dispersion of larger particles with a broader particle size distribution. The agglomerated particles as described herein have a particle size of 100 nm to 5 nm. For example, the particle size can range from 100 nm to 2 nm or from 200 nm to 1 nm.

The co-agglomerated dispersion, even once concentrated, can have a viscosity that allows it to readily flow (i.e., it does not gel). For example, an aqueous dispersion having a solids content greater than 60% can have a viscosity of less than 1000 cp at 20°C.

An antioxidant can be added to the additional-to-the-styrene-butadiene latex composition SBR latex dispersion to prevent oxidation of the double bonds of the SBR polymer and can either be added before or after vulcanization of the SBR latex. The antioxidants can be substituted phenols or secondary aromatic amines.

Exemplary substituted phenols include 2,6-di-t-butyl-p-cresol (DBT); 4,4'-thiobis(6-t-butyl-m-cresol); 3-t-butyl-4-hydroxyanisole (3-BHT); 2-t-butyl-4-hydroxyanisole (2-BHT); 2,2-methylenebis(4-methyl-6-t-butylphenol) (MBMBP); 2,2-methylenebis(4-ethyl-6-t-butylphenol) (MBEBP); 4,4'-butylidenebis(3-methyl-6-t-butylphenol) (SBMBP); 2,2-ethylidenebis(4,6-di-t-butylphenol); 2,6-di-t-butyl-4-sec-butylphenol; styrenated phenol; styrenated-p-cresol; 1,1,3-tris(2-methyl-4-hydroxy-5-t-butylphenol)butane; tetrakis[methylene-3-(3,5-di-t-butyl-4-hydroxyphenol)propionate]methane; n-octadecyl-3-(4-hydroxy-3,5-di-t-butylphenyl)propionate; triethylene glycol bis[3-(3-t-butyl-5-methyl-4-hydroxyphenyl)propionate]; 1,3,5-trimethyl-2,4,6-tris(3,5-di-t-butyl-4-hydroxybenzyl)benzene; 2,2'-dihydroxy-3,3'-di(alpha-methylcyclohexyl)-5,5'-dimethyldiphenyl methane; 4,4-methylenebis(2,6-di-t-butylphenol); tris(3,5-di-t-butyl-4-hydroxyphenol); tris(3,5-di-t-butyl-4-hydroxyphenyl) isocyanurate; 1,3,5 tris(3',5'-di-t-butyl-4-hydroxybenzoyl)isocyanurate; bis[2-methyl-4-(3-n-alkylthiopropionyloxy)-5-t-butylphenyl]sulfide; 1-oxy-3-methylisopropylbenzene; 2,5-dibutylhydroquinone; 2,2'-methylenebis(4-methyl-6-nonylphenol); alkylated bisphenol; 2,5-di-t-amylhydroquinone; polybutylated bisphenol-A; bisphenol-A; 2,6-di-t-butyl-p-ethylphenol; 2,6-bis(2'-hydroxy-3-t-butyl-5'-methylbenzyl)-4-methylphenol; 1,3,5-tris(4-t-butyl-3-hydroxy-2,6-dimethylbenzyl)isocyanurate; terephthaloyl-di(2,6-dimethyl-4-t-butyl-3-hydroxybenzyl sulfide); 2,6-t-butylphenol; 2,6-di-t-butyl-2-dimethylamino-p-cresol; 2,2'-methylenebis(4-methyl-6-cyclohexylphenol); hexamethylene glycol bis(3,5-t-butyl-4-hydroxyphenyl)propionate; (4-hydroxy-3,5-di-t-butylanilino)-2,6-bis(octylthio)-1,3,5-triazine; 2,2-thio[diethyl-bis-3-(3,5-dit-butyl-4-hydroxyphenyl)propionate]; N,N'-hexamethylene(3,5-di-t-butyl-4-hydroxycinnamide); 3,5-di-t-butyl-4-hydroxybenzylphosphoric acid diethyl ester; 2,4-dimethyl-6-t-butylphenol; 4,4'-methylenebis(2,6-di-t-butylphenol); 4,4'-thiobis(2-methyl-6-t-butylphenol); tris[2-(3,5-di-t-butyl-4-hydroxyphenyl)propionyloxyethyl]isocyanurate; 2,4,6-tributylphenol; bis[3,3-bis(4'-hydroxy-3'-t-butylphenyl)butyric acid]glycol ester; 4-hydroxymethyl-2,6-di-t-butylphenol; and bis(3-methyl-4-hydroxy-5-t-butylbenzyl)sulfide. Exemplary secondary aromatic amines include N-phenyl-N'-isopropyl-p-phenylenediamine; N-phenyl N'-(1,3-dimethylbutyl)-p-phenylenediamine; N,N'-diphenyl-p-phenylenediamine; dioctyl-diphenylamine; dibetanaphthyl-p-phenylenediamine; 2,2,4-trimethyl-1,2-dihydroquinoline polymer and diaryl-p-phenylenediamine. In addition, sulfur containing antioxidants such as dilauryl thiodipropionate, distearyl thiodipropionate and 2-mercapto-benzimidazole; phosphorus containing antioxidants such as distearylpentaerythritol diphosphite; nickel containing antioxidants such as nickel diisobutyldithiocarbamate, nickel dimethyldithiocarbamate and nickel di-n-butyldithiocarbamate; 2-mercaptotoluimidazole; zinc 2-mercaptotoluimidazole; and 1,11-(3,6,9-trioxaundecyl)bis-3-(dodecylthio)propionate can be used. The antioxidant can be provided in an amount from 0.1 to 5.0 percent or from 0.5 to 2.0 percent by weight based on the weight of the SBR copolymer.

Antiozonants can also be added to the SBR copolymer dispersion to prevent ozone present in the atmosphere from cracking the SBR, by cleaving the double bonds of the SBR polymer. Typical antiozonants include waxes (e.g., VANWAX^{®} H commercially available from R. T. Vanderbilt Co., Inc.) and N,N'-alkylaryl, N,N' dialkyl and N,N'-diaryl derivatives of p-phenylenediamine such as N,N'-di(2-octyl)-p-phenylenediamine, N,N'-di-3(5-methylheptyl)-p-phenylenediamine, N-(1,3-dimethylbutyl)-N'-phenyl-p-phenylenediamine, N-isopropyl-N'-phenyl-p-phenylenediamine, and N-cyclohexyl-N'-phenyl-p-phenylenediamine. The antiozonants can be provided in an amount from 0.5 to 10 percent, from 1 to 5 percent, or from 1.5 to 3 percent, by weight based on the weight of the SBR copolymer.

Prevulcanization inhibitors can also be added to the SBR dispersion to prevent premature vulcanization or scorching of the SBR polymer. For example, N-cyclohexylthio-phthalimide; phthalic anhydride; N-cyclohexyl-thiophthalimide; N-phenyl-N-(trichloromethyl sulfenyl)-benzene sulfonamide; bis-(sulfonamido)-sulfides or polysulfides (e.g., bis-(N-methyl-p-toluenesulfonamido)-disulfide); substituted thiophosphoramides (e.g., N-cyclohexylthio-N-phenyldiethylphosphoramide); N-(sulfenyl) methacrylamides; thio-substituted-1,3,5-triazine, - diamine or -triamines; 2-(thioamino)-4,6-diamino-1,3,5-triazines; N,N'-substituted bis-(2,4-diamino-s-triazin-6-yl)-oligosulfides; and substituted thioformamidines can be used as prevulcanization inhibitors. In some embodiments, the prevulcanization inhibitor is N-cyclohexylthio-phthalimide (SANTOGARD^{®} PVI commercially available from Flexsys) or N-phenyl-N-(trichloromethyl sulfenyl)benzene sulfonamide (VULKALENT^{®} E commercially available from Bayer). The prevulcanization inhibitor is typically provided in an amount from 1 and 5 percent or from 1.5 to 3 percent by weight based on the weight of the SBR polymer.

The SBR dispersion can be vulcanized or cured to crosslink the SBR polymer thereby increasing the tensile strength and elongation of the rubber by heating the SBR, typically in the presence of vulcanizing agents, vulcanization accelerators, antireversion agents, and optionally crosslinking agents. Exemplary vulcanizing agents include various kinds of sulfur such as sulfur powder, precipitated sulfur, colloidal sulfur, insoluble sulfur and high-dispersible sulfur; sulfur halides such as sulfur monochloride and sulfur dichloride; sulfur donors such as 4,4'-dithiodimorpholine; selenium; tellurium; organic peroxides such as dicumyl peroxide and di-tert-butyl peroxide; quinone dioximes such as p-quinone dioxime and p,p'-dibenzoylquinone dioxime; organic polyamine compounds such as triethylenetetramine, hexamethylenediamine carbamate, 4,4'-methylenebis(cyclohexylamine) carbamate and 4,4'-methylenebis-o-chloroaniline; alkylphenol resins having a methylol group; and mixtures thereof. In some examples, the vulcanizing agents include sulfur dispersions or sulfur donors. The vulcanizing agent can be present from 0.1 to 15%, from 0.3 to 10%, or from 0.5 to 5%, by weight based on the weight of the SBR polymer.

Exemplary vulcanization accelerators include sulfenamide-type vulcanization accelerators such as N-cyclohexyl-2-benzothiazole sulfenamide, N-t-butyl-2-benzothiazole sulfenamide, N-oxyethylene-2-benzothiazole sulfenamide, N-oxydiethylene-2-benzothiazole sulfenamide, N-oxydiethylene-thiocarbamyl-N-oxydiethylene sulfenamide, N-oxyethylene-2-benzothiazole sulfenamide and N,N'-diisopropyl-2-benzothiazole sulfenamide; guanidine-type vulcanization accelerators such as diphenylguanidine, di-o-tolylguanidine and di-o-tolylbiguanidine; thiourea-type vulcanization accelerators such as thiocarboanilide, di-o-tolylthiourea, ethylenethiourea, diethylenethiourea, dibutylthiourea and trimethylthiourea; thiazole-type vulcanization accelerators such as 2-mercaptobenzothiazole, dibenzothiazyl disulfide, 2-mercaptobenzothiazole zinc salt, 2-mercaptobenzothiazole sodium salt, 2-mercaptobenzothiazole cyclohexylamine salt, 4-morpholinyl-2-benzothiazole disulfide and 2-(2,4-dinitrophenylthio)benzothiazole; thiadiazine-type vulcanization accelerators such as activated thiadiazine; thiuram-type vulcanization accelerators such as tetramethylthiuram monosulfide, tetramethylthiuram disulfide, tetraethylthiuram disulfide, tetrabutylthiuram disulfide and dipentamethylenethiuram tetrasulfide; dithiocarbamic acid-type vulcanization accelerators such as sodium dimethyldithiocarbamate, sodium diethyldithiocarbamate, sodium di-n-butyldithiocarbamate, lead dimethyldithiocarbamate, lead diamyldithiocarbamate, zinc diamyldithiocarbamate, zinc dimethyldithiocarbamate, zinc diethyldithiocarbamate, zinc di-n-butyldithiocarbamate, zinc pentamethylene dithiocarbamate, zinc ethylphenyldithiocarbamate, tellurium diethyldithiocarbamate, bismuth dimethyldithiocarbamate, selenium dimethyldithiocarbamate, selenium diethyldithiocarbamate, cadmium diethyldithiocarbamate, copper dimethyldithiocarbamate, iron dimethyldithiocarbamate, diethylamine diethyldithiocarbamate, piperidinium pentamethylene dithiocarbamate and pipecoline pentamethylene dithiocarbamate; xanthogenic acid-type vulcanization accelerators such as sodium isopropylxanthogenate, zinc isopropylxanthogenate and zinc butylxanthogenate; isophthalate-type vulcanization accelerators such as dimethylammonium hydrogen isophthalate; aldehyde amine-type vulcanization accelerators such as butyraldehyde-amine condensation products and butyraldehyde-monobutylamine condensation products; and mixtures thereof. The vulcanization accelerator can be present within a range of from 0.1 to 15%, from 0.3 to 10%, or from 0.5 to 5%, by weight based on the weight of the SBR polymer.

Antireversion agents can also be included in the vulcanization system to prevent reversion, i.e., an undesirable decrease in crosslink density. Suitable antireversion agents include zinc salts of aliphatic carboxylic acids, zinc salts of monocyclic aromatic acids, bismaleimides, biscitraconimides, bisitaconimides, aryl bis-citraconamic acids, bissuccinimides, and polymeric bissuccinimide polysulfides (e.g., N,N'-xylenedicitraconamides). The antireversion agent can be present in a range of from 0 to 5%, from 0.1 to 3%, or from 0.1 to 2% by weight based on the weight of the SBR polymer.

The above additives (antioxidants, antiozonants, prevulcanization inhibitors, vulcanizing agents, vulcanization accelerators and antireversion agents) can be mixed with the SBR latex dispersion. Crosslinking agents can also be included in the vulcanization system in small amounts to facilitate crosslinking of the SBR polymer chains and are typically organic peroxides. The SBR latex dispersion can be vulcanized at an elevated temperature and pressure and the vulcanization process is well understood by those skilled in the art.

As noted above, the high temperature polymerized styrene-butadiene copolymer dispersions can be blended with low temperature polymerized styrene-butadiene copolymer dispersions produced at a temperature below 40°C (e.g., 5°C to 25°C). It is noted that the low temperature polymerized styrene-butadiene copolymer dispersions can be produced using the method described above for the high temperature polymerized styrene-butadiene copolymer dispersions except at lower temperatures.

The high temperature styrene-butadiene copolymers and dispersions thereof can be used in various applications. For example, the high temperature styrene-butadiene copolymer can be used in vehicle tires, carpet backing, adhesives, foams, and paper coatings. In some embodiments, the high temperature styrene-butadiene copolymers are used in asphalt-based systems such as hot mix asphalt and asphalt emulsions as the sole styrene-butadiene polymer composition.

In some embodiments, the high temperature styrene-butadiene copolymer can be used in hot mix asphalt formulations. A polymer-modified hot mix asphalt can be prepared, for example, by blending asphalt and an aqueous dispersion of the high temperature polymerized styrene-butadiene copolymer at a blending temperature exceeding the boiling point of water. For example, the blending temperature can be 150°C or greater or 160°C or greater. The high temperature polymerized styrene-butadiene copolymer can be blended with a second styrene-butadiene copolymer as discussed herein. The polymer-modified hot mix asphalt composition is substantially free of water and can have, for example, a viscosity of 3000 cp or less, less than 2000 cp, or less than 1500 cp at 135°C. In some embodiments, the addition of the high temperature styrene-butadiene copolymer, alone or in a blend with an SBR latex of the invention, to the hot mix asphalt composition can result in an increase in viscosity of less than 125%, less than 100%, less than 75% or less than 50%. The styrene-butadiene copolymer can be present in an amount of from 0.5% to 30% based on the total solids content of the styrene-butadiene copolymer and the asphalt. For example, the copolymer can be present in an amount of 1% or more, 1.5% or more, 2% or more, 2.5% or more, or 3% or more or can be present in an amount of 25% or less, 20% or less, 15% or less, 10% or less, 7.5% or less or 5% or less. In some embodiments, the polymer-modified hot mix asphalt composition can have a viscosity of less than 3000 cp at 135°C when it includes 3% or more of the copolymer (e.g. 3.5%, 4%, 4.5%, 5%, 5.5% or 6%). In addition, the copolymers described herein have the potential to impart manageable viscosities to hot asphalt (e.g., at 135°C) up to levels of 20 wt. % latex polymer. As noted herein, the high temperature polymerized styrene-butadiene copolymer can be cured prior to being blended with the asphalt. In some embodiments, the high temperature polymerized styrene-butadiene copolymer can be blended with the asphalt and then cured. The polymer-modified hot mix asphalt formulations can be used for paving to produce road surfaces or can be used in asphalt shingles.

In some embodiments, the high temperature styrene-butadiene copolymer can be used in an asphalt emulsion. The polymer-modified asphalt emulsion includes the asphalt and the styrene-butadiene copolymer dispersed in the water with a surfactant. The polymer-modified asphalt emulsion can be produced by providing an aqueous asphalt emulsion and mixing the asphalt emulsion and an aqueous dispersion of the high temperature styrene-butadiene copolymer. In some embodiments, the aqueous dispersion can further include a second styrene-butadiene copolymer as described herein. The second styrene-butadiene copolymer can be a styrene-butadiene copolymer polymerized at a low temperature, e.g., less than 40 °C, e.g., at 5 to 25 °C and can have a styrene-to-butadiene ratio of 20/80 to 80/20. In some embodiments, the aqueous dispersion of the styrene-butadiene copolymer (optionally including the second styrene-butadiene copolymer) can be agglomerated to increase the solids content. The styrene-butadiene copolymer can be present in an amount of from 0.5% to 30% based on the total solids content of the styrene-butadiene copolymer and the asphalt. For example, the copolymer can be present in an amount of 1% or more, 1.5% or more, 2% or more, or 2.5% or more or can be present in an amount of 25% or less, 20% or less, 15% or less, 10% or less, 7.5% or less or 5% or less. The resulting asphalt emulsions can be used, for example, to maintain paved asphalt road surfaces by employing different surface treatments including micro surfacing.

In some embodiments, the polymer comprising a styrene-butadiene rubber latex is in the form of a polymer dispersion having particles with an volume-average particle size from 20 nm to 500 nm (e.g., from 40 nm to 480 nm, from 60 nm to 460 nm, from 80 nm to 440 nm, from 100 nm to 420 nm, from 120 nm to 400 nm, from 140 nm to 380 nm, from 160 nm to 360 nm, from 180 nm to 340 nm, from 200 nm to 320 nm, or from 220 nm to 300 nm, or from 240 nm to 280 nm). In some embodiments, the polymer particles of the resultant polymer dispersion have a number average particle size of 20 nm to 300 nm (e.g., from 30 nm to 290 nm, from 40 nm to 280 nm, from 50 nm to 270 nm, from 60 nm to 260 nm, from 70 nm to 250 nm, from 80 nm to 240 nm, from 90 nm to 230 nm, from 100 nm to 220 nm, from 110 nm to 210 nm, from 120 nm to 200 nm, from 130 nm to 190 nm, or from 140 nm to 180 nm). The particle size measurements are made using dynamic light scattering measurements using the Nicomp Model 380 available from Particle Sizing Systems, Santa Barbara, CA. The polymer dispersion can be produced as a dispersion that includes, as a disperse phase, particles of the copolymer dispersed in water. The polymer dispersion can be prepared with a total solids content of from 5% to 90% by weight (e.g., 10% to 80% by weight, 20% to 70% by weight, 25% to 65% by weight, 35% to 60% by weight, or 45% to 55% by weight). In some embodiments, the polymer dispersion can have a total solids content of 50% or greater by weight (e.g., from 50% or greater by weight to 90% or less by weight). In some embodiments, the copolymer dispersion can be spray dried to produce a powder.

The composition can include one or more surfactants (emulsifiers) such as nonionic surfactants, anionic surfactants, cationic surfactants, amphoteric surfactants, or a mixture thereof. Suitable nonionic surfactants include, but are not limited to, polyoxyalkylene alkyl ethers and polyoxyalkylene alkylphenyl ethers (e.g., diethylene glycol monoethyl ether, diethylene glycol diethyl ether, polyoxyethylene lauryl ether, polyoxyethylene stearyl ether, and polyoxyethylene nonylphenyl ether); oxyethylene-oxypropylene block copolymers; sorbitan fatty acid esters (e.g., sorbitan monolaurate available as SPAN^{®} 20 from Merck Schuchardt OHG, sorbitan monooleate available as SPAN^{®} 80 from Merck Schuchardt OHG, and sorbitan trioleate available as SPAN^{®} 85 from Merck Schuchardt OHG); polyoxyethylene sorbitan fatty acid esters (e.g., polyoxyethylene sorbitan monolaurate available as TWEEN^{®} 20 and TWEEN^{®} 21 from Uniqema, polyoxyethylene sorbitan monopalmitate available as TWEEN^{®} 40 from Uniqema, polyoxyethylene sorbitan monostearate available as TWEEN^{®} 60, TWEEN^{®} 60K, and TWEEN^{®} 61 from Uniqema, polyoxyethylene sorbitan monooleate available as TWEEN^{®} 80, TWEEN^{®} 80K, and TWEEN^{®} 81 from Uniqema, and polyoxyethylene sorbitan trioleate available as TWEEN^{®} 85 from Uniqema); polyoxyethylene sorbitol fatty acid esters (e.g., tetraoleic acid polyoxyethylene sorbitol); glycerin fatty acid esters (e.g., glycerol monooleate); polyoxyethylene glycerin fatty acid esters (e.g., monostearic acid polyoxyethylene glycerin and monooleic acid polyoxyethylene glycerin); polyoxyethylene fatty acid esters (e.g., polyethylene glycol monolaurate and polyethylene glycol monooleate); polyoxyethylene alkylamine; and acetylene glycols. In some embodiments, the nonionic surfactant can have a HLB (hydrophilic lipophilic balance) at room temperature such that 8 < HLB < 15. In some embodiments, the HLB is 14 or less. In some embodiments, the nonionic surfactant includes an ethylene oxide (EO)ₘ and/or propylene oxide (PO)ₙ adduct of an alkyl, alkylbenzene or dialkylbenzene alcohol wherein (m+n) ≤ 14, (m+n) ≤ 12, or (m+n) ≤ 10 (e.g., 6 ≤ (m+n) ≤ 10), such as those available from BASF under the LUTENSOL^{™} trademark.

Suitable anionic emulsifiers include, but are not limited to, fatty acids, alkyl sulfates, alkyl ether sulfates, alkyl benzene sulfonic acid, alkyl phosphoric acid or salts thereof, sucrose esters, and mixtures thereof. Anionic polyelectrolytes such as tartrates, borates, oxalates and phosphates, can also be used in the composition. Additional suitable anionic surfactants and polyelectrolytes include, but are not limited to, M28B and other anionic surfactants available from MeadWestvaco under the INDULIN^{®} trademark (such as INDULIN^{®} AMS, INDULIN^{®} SA-L, INDULIN^{®} ISE, INDULIN^{®} 201, INDULIN^{®} 202, and INDULIN^{®} 206); anionic surfactants available from Akzo Nobel under the REDICOTE^{®} trademark (such as REDICOTE^{®} E-15 and REDICOTE^{®} E-62C); and lignosulfonates such as those available under the MARASPERSE^{™} trademark (such as MARASPERSE^{™} CBOS-3 and MARASPERSE^{™} N22). In some embodiments, the emulsifier includes an anionic fatty acid-based emulsifier.

Cationic emulsifiers can be classified as cationic rapid setting (CRS), cationic quick setting (CQS), cationic medium setting (CMS), or cationic slow setting (CSS) emulsifiers and these classifications are known in the art and can be readily measured in an emulsion as set forth in ASTM D977 and D2397. In some embodiments, cationic polyelectrolytes can be provided in the composition. Suitable cationic emulsifiers and polyelectrolytes include alkylamine salts, quaternary ammonium salts, cationic surfactants available from Akzo Nobel under the REDICOTE^{®} trademark (such as REDICOTE^{®} 4819, REDICOTE^{®} E-64R, REDICOTE^{®} E-5, REDICOTE^{®} E-9, REDICOTE^{®} E9A, REDICOTE^{®} E-11, REDICOTE^{®} E-16, REDICOTE^{®} E-44, REDICOTE^{®} E-120, REDICOTE^{®} E-250, REDICOTE^{®} E-2199, REDICOTE^{®} E-4868, REDICOTE^{®} C-346, REDICOTE^{®} C-404, REDICOTE^{®} C-450, and REDICOTE^{®} C-471), cationic surfactants available from MeadWestvaco under the INDULIN^{®} and AROSURF^{®} trademarks (such as INDULIN^{®} 814, INDULIN^{®} AMS, INDULIN^{®} DF-30, INDULIN^{®} DF-40, INDULIN^{®} DF-42, INDULIN^{®} DF-60, INDULIN^{®} DF-80, INDULIN^{®} EX, INDULIN^{®} FRC, INDULIN^{®} MQK, INDULIN^{®} MQK-1M, INDULIN^{®} MQ3, INDULIN^{®} QTS, INDULIN^{®} R-20, INDULIN^{®} SBT, INDULIN^{®} W-1, and INDULIN^{®} W-5), ASFIER^{®} N480 available from Kao Specialties Americas, CYPRO^{™} 514 available from Cytec Industries, polyethyleneimines such as those available from BASF under the POLYMIN^{®} trademark (such as POLYMIN^{®} SK, POLYMIN^{®} SKA, POLYMIN^{®} 131, POLYMIN^{®} 151, POLYMIN^{®} 8209, POLYMIN^{®} P, and POLYMIN^{®} PL), and polyvinylamines such as those available from BASF under the CATIOFAST^{®} trademark (such as CATIOFAST^{®} CS, CATIOFAST^{®} FP, CATIOFAST^{®} GM, and CATIOFAST^{®} PL). Other suitable cationic polyelectrolytes and surfactants include those listed in, for instance, U.S. Patent Nos. 5,096,495, 5,160,453, and 5,443,632. In some embodiments, the cationic emulsifier includes an amine-based emulsifier.

Suitable amphoteric surfactants include, but are not limited to, betaine acetate, amide betaine, sulfobetaine, imidazolium betaine, and amine oxides. An exemplary amphoteric surfactant is REDICOTE^{®} E-7000 surfactant, which is available from Akzo Nobel. Suitable anionic emulsifiers include fatty acids, alkyl sulfates, alkyl ether sulfates, alkyl benzene sulfonic acid, alkyl phosphoric acid or salts thereof, sucrose esters, and mixtures thereof. Anionic polyelectrolytes such as tartrates, borates, oxalates and phosphates, can also be used in the composition. Additional suitable anionic surfactants and polyelectrolytes include, but are not limited to, M28B and other anionic surfactants available from MeadWestvaco under the INDULIN^{®} trademark (such as INDULIN^{®} AMS, INDULIN^{®} SA-L, INDULIN^{®} ISE, INDULIN^{®} 201, INDULIN^{®} 202, and INDULIN^{®} 206); anionic surfactants available from Akzo Nobel under the REDICOTE^{®} trademark (such as REDICOTE^{®} E-15 and REDICOTE^{®} E-62C); and lignosulfonates such as those available under the MARASPERSE^{™} trademark (such as MARASPERSE^{™} CBOS-3 and MARASPERSE^{™} N22). In some embodiments, the emulsifier includes an anionic fatty acid-based emulsifier.

Some formulations for applications disclosed herein comprise a solvent such as water to disperse or emulsify the polymer and/or the asphalt. Some compositions disclosed herein comprise water. In some embodiments, the composition comprises asphalt and the asphalt comprises water and is an aqueous emulsion. In some embodiments, the composition comprises the polymer and the polymer comprises water and is an aqueous dispersion. In some embodiments, the asphalt and/or the polymer comprise water, and one or both are an aqueous dispersion or emulsion. Some formulations of the applications disclosed herein do not comprise water but include a non-aqueous solvent. Some compositions disclosed herein do not comprise water. In some embodiments, the polymer and/or asphalt may be in the form of a non-aqueous dispersion or emulsion.

The composition can also include aggregate. The aggregate can be of varying sizes as would be understood by those of skill in the art. Any aggregate that is traditionally employed in the production of bituminous paving compositions can be used, including dense-graded aggregate, gap-graded aggregate, open-graded aggregate, reclaimed asphalt pavement, and mixtures thereof. Dense-graded aggregate exhibits the greatest mineral surface area (per unit of aggregate). Open-graded aggregate largely consist of a single, large-sized (e.g., around 0.375 inch to 1.0 inch) stone with very low levels (e.g., less than about two percent of the total aggregate) of fines (e.g., material less than 0.25 inch) or filler (e.g., mineral material less than 0.075 mm). Gap graded aggregate fall between dense-graded and open-graded classes. Reclaimed asphalt pavement (RAP) material generally reflects the gradation of the pavement from which the reclaimed material was obtained. If the original pavement was a dense-graded mix, the RAP will also be dense graded, although the filler content is generally observed to be lower than the design limits of the origin aggregate specifications. The aggregate can be applied in an amount of from 100 parts by weight to 2000 parts by weight.

Compositions that include aggregate can also include air voids in some embodiments. The air voids can be present in an amount of from 2% to 30% by volume (e.g., greater than 2% to 10% by volume).

An asphalt composition can be prepared by mixing asphalt, any aromatic recycling agents or non-asphaltic rosin materials, the ionic crosslinking agent, an emulsifier, an acid or base, water and any additives, and optionally a polymer derived from a styrene-butadiene rubber latex. In some embodiments, the polymer is not crosslinked by an ionic crosslinking agent and can be added separately from an ionic crosslinking agent into the asphalt composition and the polymer and the asphalt can be crosslinked by the ionic crosslinking agent in the asphalt composition once the water is substantially evaporated. For example, an asphalt composition can include the ionic crosslinking agent and further components can be added to or included in that composition. For example, the asphalt composition can be an emulsion comprising the asphalt and the ionic crosslinking agent. In some embodiments, a composition comprising asphalt and an ionic crosslinking agent can be provided, the polymer (e.g., as an aqueous dispersion) can be mixed with the composition, and the polymer and asphalt can be crosslinked with the ionic crosslinking agent resulting in an asphalt-based composition comprising a crosslinked polymer once the water is substantially evaporated.

The particular components can be mixed together by means known in the art. As previously mentioned, the particular components can be mixed together in any order. In some embodiments, the polymer derived from a styrene-butadiene rubber latex is pre-mixed with an anionic emulsifier or a cationic emulsifier to produce a charged polymer before mixing the asphalt and the acid or base with the emulsifier and the polymer. In some embodiments, the polymer derived from a styrene-butadiene rubber latex is not pre-mixed with any anionic nor a cationic emulsifier so as to produce a charged latex polymer prior to mixing the asphalt, the acid or base with the emulsifier used in the soap tank of the emulsion manufacturing system. If aggregate is blended into the asphalt composition, it can be added, for example, after the other components are blended. In some embodiments, the asphalt composition is prepared at an elevated temperature, for example, from 160°C to 200°C (hot-mix asphalt), from 120°C to 160°C (warm-mix asphalt), or at temperatures below 120°C (e.g., from 5°C to 60°C or from 5°C to 90°C). In some embodiments, the asphalt composition can be prepared at ambient temperature.

The asphalt composition can be applied for use in a pavement or paved surface. A pavement surface or a paved surface is a hard surface that can bear pedestrian or vehicular travel can include surfaces such as motorways/roads, parking lots, bridges/overpasses, runways, driveways, vehicular paths, running paths, walkways, and the like. The asphalt composition can be applied directly to an existing paved surface or can be applied to an unpaved surface. In some embodiments, the composition is applied to an existing paved layer as a tie layer, and a new layer comprising asphalt such as a hot mix layer is applied to the tie layer. The asphalt composition can be applied to a surface "cold," i.e., at a temperature below 40°C, or can be applied to at an elevated temperature, for example, from 50°C to 120°C, from 55°C to 100°C, or from 60°C to 80°C.

**In** some embodiments, aggregate is blended into the asphalt composition before application to a surface. In some embodiments, aggregate is applied to the composition after it is applied to a surface. In some embodiments, sand can be applied to the composition after it is applied to a surface, for example, if the composition is to be used as a tack coat, to reduce the tackiness of the surface. The composition and optionally the aggregate can be compacted after application to the surface as would be understood by those of skill in the art.

**In** some embodiments, the composition is used as a tack coat or coating. The tack coat is a very light spray application of diluted asphalt emulsion that can be used to promote a bond between an existing surface and the new asphalt application. The tack coat acts to provide a degree of adhesion or bonding between asphalt layers, and in some instances, can fuse the layers together. The tack coat also acts to reduce slippage and sliding of the layers relative to other layers in the pavement structure during use or due to wear and weathering of the pavement structure. As described above, the composition can be applied to an existing paved layer (such as a hot-mix layer) as a tie layer as a tack coat, and a new layer comprising asphalt such as a hot-mix layer can be applied to the tack coat. As would be understood by those skilled in the art, the tack coat typically does not include aggregate, although sand may be applied to the tack coat after application as mentioned above. The composition described herein has unexpectedly been found to be a low-tracking or "trackless" coating such that, after the tack coating is cured, paving vehicles or other traffic may be permitted to pass over the coating such that the vehicle tires or treads stick to the coating a limited amount (low track) or not at all (trackless). The composition described herein has unexpectedly been found to be low-tracking or "trackless," for example, at higher pavement temperatures (50°C-60°C) and/or with low or medium pen asphalts having a pen value of greater than 40 dmm. The tack coat is tacky and capable of bonding together layers of a pavement structure at ambient conditions for pavement construction or at elevated temperatures, e.g., up to 140°C as discussed above. In fact, the tack coat provides a sufficiently flexible asphalt at low temperatures with sufficient bond strength to bond adjacent asphalt layers. The tack coat cures quickly such that the pavement layer may be applied to the coating, hours to days after the emulsion is applied to the substrate. The applied composition can cure in 15 minutes to 45 minutes and may cure as rapidly as 5 minutes to 15 minutes after the composition is applied to the exposed surface. The cure rate will depend on the application rate, the dilution ratios used, the base course conditions, the weather, and other similar considerations. If the prepared pavement surface or base course contains excess moisture, the curing time of the emulsion may be increased.

In some embodiments, the composition can also be used as a fog seal. A fog seal is a surface treatment that applies a light application of the composition to an existing paved surface such as a parking lot to provide an enriched pavement surface that looks fresh and black. In some embodiments, the fog seal would include a filler such as carbon black to blacken the composition. As would be understood by those skilled in the art, the fog seal might not include aggregate. The fog seal compositions, like the bond coat compositions, have also been shown to be to be low-tracking or "trackless" coatings.

In some embodiments for the tack coat and fog seal, the asphalt can be present in an amount of from 58 to 62 parts by weight, the polymer comprising a styrene-butadiene rubber latex can be present in an amount of from 0 to 6 parts by weight, the emulsifier can be present in an amount of from 0.75 to 3 parts by weight, the acid or base can be present in an amount of from 0.75 to 3 parts by weight, any optional additives be provided in an amount of up to 5 parts by weight, and water can be present in an amount of from 30 to 40 parts by weight. In some embodiments, the composition can be further diluted with water. The composition can be applied at a rate of 0.05-0.10 gallons/yd².

In some embodiments, the composition can be used as a chip seal composition. Chip seals are the most common surface treatment for low-volume roads. The chip seal composition can be applied to a surface followed by the application of aggregate. In some embodiments for the chip seal, the asphalt can be present in an amount of from 64 to 67 parts by weight, the polymer comprising a styrene-butadiene rubber latex can be present in an amount of from 0 to 3.5 parts by weight, the emulsifier can be present in an amount of from 0.15 to 0.35 parts by weight, the acid or base can be present in an amount of from 0.15 to 0.35 parts by weight, any optional additives be provided in an amount of up to 5 parts by weight, and water can be present in an amount of from 30 to 40 parts by weight. The aggregate can be provided in an amount of from 200 to 1000 parts by weight.

In some embodiments, the composition can be used as a microsurfacing application. Microsurfacing is designed for quick traffic return with the capacity of handling high traffic volume roadways. For the microsurfacing composition, aggregate can be mixed in with the asphalt, optionally a polymer comprising a styrene-butadiene rubber latex, emulsifier and acid or base before application to a surface. In some embodiments for the microsurfacing, the asphalt can be present in an amount of from 60 to 62 parts by weight, the polymer comprising a styrene-butadiene rubber latex can be present in an amount of from 0 to 4.5 parts by weight, the emulsifier can be present in an amount of from 0.5 to 2.5 parts by weight, the acid or base can be present in an amount of from 0.5 to 2.5 parts by weight, any optional additives be provided in an amount of up to 5 parts by weight (e.g., 0.25 to 2 parts by weight of one or more inorganic salts or up to 5 parts by weight of a mineral filler), and water can be present in an amount of from 30 to 40 parts by weight. The aggregate can be provided in an amount of from 500 to 2000 parts by weight.

The resulting paved surface layer using the composition, once dried, includes the components provided in the composition with the exception of water. Thus, the paved surface layer can include asphalt in an amount of from 40 to 70 parts by weight, a polymer comprising a styrene-butadiene rubber latex in an amount of from 0 to 10 parts by weight, an emulsifier in an amount of from 0.1 to 4 parts by weight, and an acid or base in an amount of from 0.1 to 4 parts by weight. In the case of a tack coat, the paved surface can include a first layer comprising asphalt; a tie layer provided on the first layer, comprising asphalt in an amount of from 40 to 70 parts by weight, the polymer comprising a styrene-butadiene rubber latex in an amount of from 0 to 10 parts by weight, an emulsifier in an amount of from 0.1 to 4 parts by weight, and an acid or base in an amount of from 0.1 to 4 parts by weight; and a second layer comprising asphalt provided on the tie layer.

Although parts by weight are used for the compositions described herein, percentages by weight could be used interchangeability with the parts by weight, for example, where the composition includes the asphalt, the optional polymer comprising a styrene-butadiene rubber latex, the emulsifier, the acid or base, the water, and any additives excluding aggregate. For example, the composition can be described to include (a) asphalt in an amount of from 40 to 70 percent by weight; (b) a polymer comprising a styrene-butadiene rubber latex in an amount of from 0 to 10 percent by weight; (c) an emulsifier in an amount of from 0.1 to 4 percent by weight; (d) an acid or a base in an amount of from 0.1 to 4 percent by weight; and (e) water in an amount of from 25 to 60 percent by weight.

Because the compositions described herein can be produced without the need for high activation temperatures, the compositions can be used in a variety of applications (e.g., warm-mix asphalt applications occurring at 120°C-140°C) to provide adequate crosslinking at a variety of temperatures. For example, the composition can be blended with the asphalt composition at a temperature of 160°C or less, 140°C or less, or 120°C or less. The compositions and methods disclosed herein can also provide greater control of, for instance, polymer-modified asphalt, depending on the extent of the network formed by the crosslinking reaction between the polymer and/or asphalt and the crosslinking agent. Further, the compositions and methods disclosed herein do not require the use of sulfur and as a result, hydrogen sulfide (H₂S) emissions can be reduced. For example, in some embodiments, the asphalt composition is substantially free of sulfur or sulfur-based crosslinking agents. In other words, the asphalt composition can be produced without the use of sulfur-based crosslinking agents.

In some embodiments, the compositions disclosed herein can be used in paints, coatings, paper coating or binding compositions, carpet compositions (e.g., carpet backing), foams, or adhesives. In some embodiments, one or more thickeners (rheology modifiers) can be added to increase the viscosity of the composition. Suitable thickeners can include, but are not limited to, acrylic copolymer dispersions sold under the STEROCOLL and LATEKOLL trademarks from BASF Corporation, Florham Park, NJ, hydroxyethyl cellulose, guar gum, jaguar, carrageenan, xanthan, acetan, konjac, mannan, xyloglucan, urethanes and mixtures thereof. The thickeners can be added to the composition formulation as an aqueous dispersion or emulsion, or as a solid powder.

The composition described herein can include, for instance, additives such as dispersants, initiators, stabilizers, chain transfer agents, buffering agents, salts, preservatives, fire retardants, wetting agents, protective colloids, biocides, corrosion inhibitors, crosslinking promoters, and lubricants. Exemplary dispersants can include sodium polyacrylates in aqueous solution such as those sold under the DARVAN trademark by R.T. Vanderbilt Co., Norwalk, CT.

Paint and coating compositions can, for instance, include one or more pigments or dyes. Exemplary composition pigments include titanium dioxide composition pigments, MIRAGLOSS 91 (a kaolin clay composition pigment commercially available from BASF Corporation), LOPAQUE M (a kaolin clay composition pigment commercially available from Thiele Kaolin Company), and HYDROCARB 90 (a calcium carbonate composition pigment commercially available from Omya Paper). In some embodiments, the composition can include one or more dyes or colored pigments. Exemplary dyes can include basic dyes, acid dyes, anionic direct dyes, and cationic direct dyes. Exemplary colored pigments include organic pigments and inorganic pigments in the form of anionic pigment dispersions and cationic pigment dispersions.

By way of non-limiting illustration, examples of certain embodiments of the present disclosure are given below.

### METHODS

Methods for preparing the asphalt compositions described herein are also provided. In some embodiments, the method can include preparing a latex composition of the polymer. A latex composition can be prepared by polymerizing monomers, such as styrene and butadiene monomers in an aqueous emulsion polymerization reaction at a suitable temperature. The polymerization can be carried out at low temperature (i.e., cold polymerization) or at high temperature method (i.e., hot polymerization). In some embodiments, polymerization can be carried out at low temperature such as 30°C or less (for example from 2°C to 30°C, 2°C to 25°C, 5°C to 30°C, or 5°C to 25°C). In some embodiments, polymerization can be carried out at high temperature such as from 40°C or greater, 50°C or greater, or 60°C or greater. In some embodiments, the high temperature can be from 40°C to 100°C, 40°C to 95°C, or 50°C to 90°C.

The polymerized polymer can be produced using either a continuous, semi-batch (semi-continuous) or batch process. In some examples, the polymer can be produced using a continuous method by continuously feeding one or more monomer streams, a surfactant stream, and an initiator stream to one or more reactors. The surfactant stream includes a surfactant and water and can, in some embodiments, be combined with the initiator stream.

The polymerization reaction can be conducted in the presence of molecular weight regulators to reduce the molecular weight of the copolymer of other additives such as dispersants, stabilizers, chain transfer agents, buffering agents, salts, preservatives, fire retardants, wetting agents, protective colloids, biocides, crosslinking promoters, antioxidants, antiozonants, prevulcanization inhibitors, and lubricants. In some embodiments, the additives can be added to the latex composition after the polymerization reaction. The latex composition can be agglomerated, e.g., using chemical, freeze or pressure agglomeration, and water removed to produce the desired solids content. In some embodiments, the solids content is 55% or greater, 60% or greater, or 65% or greater.

In some embodiments, the latex composition can have an overall anionic charge, non-ionic, or cationic charge. One of ordinary skill in the art understands that the overall charge of the latex composition can be influenced by the surfactant used, the particular monomers used to form the polymer in the latex composition, and the pH of the latex composition.

In some embodiments, the latex composition may be substantially free of coagulum or polymer residue when blended with a cationic or an anionic surfactant that is used to prepare a cationic or an anionic asphalt emulsion, respectively. A latex composition is substantially free of coagulum if it can be filtered through 150-micron filter and leaves a residue of less than 0.2 wt.% based on the total weight of the latex composition.

The method of preparing the asphalt emulsions can include contacting asphalt with a latex composition as described herein. In some embodiments, the latex composition is cationic imparted by the incorporation of a cationic flipping surfactant. In some embodiments no cationic flipping surfactant is added to the styrene-butadiene and styrene-butadiene based latex compositions of the present invention. In some embodiments no anionic flipping surfactant is added to the styrene-butadiene latex composition of the present invention to impart a negative charge to the latex prior to its use in anionic asphalt emulsions. The particular components, including the asphalt, the latex composition, and the surfactant in the soap tank can be mixed together by any means known in the art. The particular components can be mixed together in any order.

The particular components, including the asphalt, the latex composition, and the soap tank surfactant solution can be fed into a colloid mill at a temperature of less than 100°C (e.g., 60°C to 95°C) where high shear mixing produces an asphalt emulsion having asphalt droplets dispersed in the water.

The droplets in the asphalt emulsion can have a narrow particle size distribution. In some embodiments, the droplets in the asphalt emulsion can have a median particle size of 15 µm or less, 14 µm or less, 13 µm or less, 12 µm or less, 11 µm or less, 10 µm or less, 9 µm or less, 8 µm or less, 7 µm or less, 6 µm or less, or 5 µm or less and/or of 5 µm or greater, 6 µm or greater, 7 µm or greater, 8 µm or greater, 9 µm or greater, or 10 µm or greater. In some embodiments, the droplets in the asphalt emulsion can have a mean particle size of 15 µm or less, 14 µm or less, 13 µm or less, 12 µm or less, 11 µm or less, 10 µm or less, 9 µm or less, 8 µm or less, 7 µm or less, 6 µm or less, or 5 µm or less and/or of 5 µm or greater, 6 µm or greater, 7 µm or greater, 8 µm or greater, 9 µm or greater, or 10 µm or greater. In some embodiments, the droplets in the asphalt emulsion can have a median particle size of from 3 to 15 µm. In some embodiments, the droplets in the asphalt emulsion can have a median distribution of droplet particles having a standard deviation of less than 30%, less than 25%, less than 20%, less than 15%, or less than 10%.

The asphalt emulsions can have a viscosity of 100 cp or greater, when the asphalt is present in an amount of 65% by weight, based on the asphalt emulsion, in the absence of a thickener. In the event the asphalt content is less than or greater than 65% by weight, the asphalt content can be adjusted by adding or removing water. In some embodiments, the asphalt emulsions can have a viscosity of 150 cp or greater, 200 cp or greater, 250 cp or greater, 300 cp or greater, 350 cp or greater, 400 cp or greater, 450 cp or greater, 500 cp or greater, 600 cp or greater, 700 cp or greater, 800 cp or greater, 900 cp or greater, 1000 cp or greater, 1500 cp or greater, 2000 cp or greater, or 2500 cp or greater, when the asphalt is present in an amount of 65% by weight, based on the asphalt emulsion. In some embodiments, the asphalt emulsions can have a viscosity of 2500 cp or less, 2000 cp or less, 1500 cp or less, 1250 cp or less, 1000 cp or less, 950 cp or less, 900 cp or less, 850 cp or less, 800 cp or less, 750 cp or less, 700 cp or less, 650 cp or less, 600 cp or less, 550 cp or less, 500 cp or less, 400 cp or less, 250 cp or greater, 300 cp or less, or 200 cp or less, when the asphalt is present in an amount of 65% by weight, based on the asphalt emulsion. In some embodiments, the viscosity of the asphalt emulsions can be from 100 cp to 2500 cp, for example, 100 cp to 1500 cp, 100 cp to 1000 cp, 100 cp to 800 cp, 100 cp to 600 cp, 100 cp to 500 cp, 200 cp to 1500 cp, 200 cp to 1000 cp, 200 cp to 800 cp, 200 cp to 600 cp, 200 cp to 500 cp, 100 cp to 500 cp, 100 cp to 450 cp, or 150 cp to 500 cp, when the asphalt is present in an amount of 65% by weight, based on the asphalt emulsion. In some embodiments, the addition of the phosphoric acid flipped cationic latex composition and/or aluminum sulfate to the asphalt emulsions can result in an increase in viscosity of 1 time or greater, 2 times or greater, 3 times or greater, 4 times or greater, 5 times or greater, 6 times or greater, or up to 10 times or greater, compared to an asphalt emulsion without the phosphoric acid flipped cationic latex composition and/or aluminum sulfate.

In some embodiments, the asphalt emulsion using a PG 58-28 base asphalt can have a softening point of 65°C or greater (for example, 70°C or greater, 75°C or greater, or 80°C or greater). In some embodiments, the asphalt emulsion using a PG 58-28 base asphalt can have a softening point of 85°C or less (for example, 80°C or less, 75°C or less, or 70°C or less). In some embodiments, the asphalt emulsion using a PG 58-28 base asphalt can have a softening point of from 65°C to 85°C or from 70°C to 80°C. The Ring and Ball Softening Point test, such as those described in ASTM D36 and/or AASHTO T53, can be used to measure the temperature at which an asphalt composition becomes soft and flowable.

The asphalt emulsions described herein can adhere to the standards of ASTM D977, ASTM D2397, AASHTO M140, and AASHTO M208.

The latex composition can be used to prepare polymer modified hot mix asphalt compositions. A hot mix asphalt can be prepared, for example, by blending asphalt, a latex composition as described herein, and optionally a basic salt at a blending temperature exceeding the boiling point of water. In some embodiments, the latex composition can have a pH of 7 or less as described herein. In some embodiments, the latex composition can be anionic. For example, the latex composition can include a carboxylated polymer. In some embodiments, the latex composition can be nonionic. In some embodiments, the latex composition can be cationic, for example, by including a cationic surfactant. The blending temperature of the hot mix asphalt can be 150°C or greater or 160°C or greater and 200°C or less. The hot mix asphalt composition is substantially free of water and can have, for example, a viscosity of 3000 cp or less, 2500 cp or less, 2000 cp or less, or 1500 cp or less at 135°C, when the asphalt is present in an amount of 95% by weight, based on the hot mix asphalt compositions. In some embodiments, the hot-mix asphalt composition can have a viscosity of 1000 cp or greater, 1250 cp or greater, 1500 cp or greater, 2000 cp or greater, or 2500 cp or greater, when the asphalt is present in an amount of 95% by weight, based on the hot mix asphalt compositions. In some embodiments, the viscosity of the hot-mix asphalt composition can be from 1000 cp to 3000 cp, for example, 1000 cp to 2500 cp, 1000 cp to 2000 cp, 1500 cp to 2500 cp, or 1500 cp to 2000 cp, when the asphalt is present in an amount of 95% by weight, based on the hot mix asphalt compositions. The latex composition can be in the amounts described above when added to the hot mix asphalt, but the resulting hot mix asphalt will include less of the latex composition because the water is evaporated leaving the latex polymer and any other non-volatile additives. For example, the latex polymer can be present in a hot mix asphalt composition in an amount of from 0.05 wt.% to 10 wt.% (e.g., from 0.5 wt.% to 3 wt.%), based on the weight of the hot mix asphalt composition. In some embodiments, the hot mix asphalt composition has a pH of 7 or less, or 6 or less (e.g., 1.5 to 6), as described herein.

Methods of using the asphalt compositions described herein are disclosed. The asphalt compositions can be applied to a surface to be treated, restored, or sealed. Prior to application of the asphalt composition, the surface to be treated is usually cleaned to remove excess surface dirt, weeds, and contaminants by, for example, brushing the surface, blasting the surface with compressed air, or washing the surface. The asphalt compositions can be applied using any suitable method for applying a liquid to a porous surface, such as brushing, wiping and drawing, or spraying.

In some embodiments, the asphalt compositions, once applied, wet the surface thereby forming a layer on at least a portion and typically at least a substantial portion (e.g. more than 50%) of the surface. In some embodiments, when asphalt emulsions are applied to a surface, water loss occurs in the emulsion, primarily due to adsorption of the water. The water also delivers the asphalt and the cationic latex composition to the surface. In some embodiments, the asphalt emulsion penetrates and adheres to the surface it is applied to, cures in a reasonably rapid time, and provides a water-tight and air-tight barrier on the surface. The asphalt emulsion layer also promotes adhesion between the older surface and the later applied surface treatment layer. It is desirable for the asphalt compositions to be easily applied and have an adequate shelf life.

An aggregate can be blended into the asphalt compositions before application to a surface. In some embodiments, the aggregate can be applied to the asphalt compositions after it is applied to a surface. For example, sand can be applied to the asphalt compositions after it is applied to a surface, for example, if the composition is to be used as a tack coat, to reduce the tackiness of the surface. The asphalt compositions and optionally the aggregate can be compacted after application to the surface as would be understood by those of skill in the art.

The asphalt compositions can be applied for use in a pavement or paved surface. A pavement surface or a paved surface is a hard surface that can bear pedestrian or vehicular travel can include surfaces such as motorways/roads, parking lots, bridges/overpasses, runways, driveways, vehicular paths, running paths, walkways, and the like. The asphalt compositions can be applied directly to an existing paved surface or can be applied to an unpaved surface. In some embodiments, the asphalt compositions can be applied to an existing paved layer as a tie layer, and a new layer comprising asphalt such as a hot mix layer is applied to the tie layer. The asphalt compositions can be applied to a surface "cold," i.e., at a temperature below 40°C, or can be applied to at an elevated temperature, for example, from 50°C to 120°C, from 55°C to 100°C, or from 60°C to 80°C.

**In** some embodiments, the asphalt compositions can be used as a tack coat or coating. The tack coat is a very light spray application of diluted asphalt emulsion that can be used to promote a bond between an existing surface and the new asphalt application. The tack coat acts to provide a degree of adhesion or bonding between asphalt layers, and in some instances, can fuse the layers together. The tack coat also acts to reduce slippage and sliding of the layers relative to other layers in the pavement structure during use or due to wear and weathering of the pavement structure. In some embodiments, the asphalt compositions can be applied to an existing paved layer (such as a hot-mix layer) as a tack coat, and a new layer comprising asphalt such as a hot-mix layer can be applied to the tack coat. As would be understood by those skilled in the art, the tack coat typically does not include aggregate, although sand may be applied to the tack coat after application as mentioned herein.

As described herein, the asphalt compositions cure/dry quickly. For example, where the asphalt compositions are used as a tack coating, the coating cures quickly such that a pavement layer may be applied to the coating, hours to days after the emulsion is applied to the substrate. In some embodiments, the applied composition can cure in 15 minutes to 45 minutes and may cure as rapidly as less than 1 minute to 15 minutes after the composition is applied to the exposed surface. The cure rate will depend on the application rate, the dilution ratios used, the base course conditions, the weather, and other similar considerations. If the prepared pavement surface or base course contains excess moisture, the curing time of the asphalt compositions may be increased.

In some embodiments, the asphalt compositions can also be used as a fog seal. A fog seal is a surface treatment that applies a light application of the composition to an existing paved surface such as a parking lot to provide an enriched pavement surface that looks fresh and black. In some embodiments, the fog seal would include a filler such as carbon black to blacken the composition. As would be understood by those skilled in the art, the fog seal might not include aggregate. The fog seal compositions, like the bond coat compositions, have also been shown to be to be low-tracking or "trackless" coatings.

In some embodiments, the asphalt compositions can be used as a chip seal composition. Chip seals are the most common surface treatment for low-volume roads. The chip seal composition can be applied to a surface followed by the application of aggregate. In some embodiments, the asphalt compositions can be used in a microsurfacing application. Microsurfacing is designed for quick traffic return with the capacity of handling high traffic volume roadways. For the microsurfacing composition, aggregate can be mixed in with the cationic asphalt composition before application to a surface.

In some embodiments, the asphalt compositions can be used in paints, coatings, paper coating or binding compositions, carpet compositions (e.g., carpet backing), foams, or adhesives.

### EXAMPLES

### Non-carboxylated styrene-butadiene latex preparation

Example 1. A non-carboxylated styrene-butadiene latex was prepared as follows. A copolymer derived from 41.5 parts by weight styrene, 2.5 parts by weight acrylamide and 56 parts by weight butadiene was produced. A styrene feed, a butadiene feed, an initiator feed comprising an aqueous solution of sodium persulfate initiator (1.15 parts by weight of the total monomers) and tert-dodecylmercaptan (0.75 parts by weight of the total monomers) were added over 6 hours to a pre-heated reactor (92°C) containing water, a polystyrene seed latex (0.63 parts by weight of the total monomers), and TRILON BX (0.02 parts by weight of the total monomers), an ethylenediaminetetraacetic acid commercially available from BASF Corporation

(Florham Park, NJ). The stabilization of the latex particles during polymerization was accomplished by feeding an aqueous solution of a 10-mole ethylene oxide adduct of tridecyl alcohol surfactant (2.0 parts by weight of the total monomers) over the course of the polymerization. In addition, 0.12 parts of tetrasodium pyrophosphate were fed into the reactor over the course of the polymerization. The temperature was maintained at 92°C throughout the polymerization reaction. Following the polymerization process, the latex dispersion was stripped of the residual monomers to provide an aqueous dispersion with residual styrene levels of less than 400 ppm.

Following the same general procedure as in Example 1, the following examples were prepared.

| Example 2 | | | Example 3 | | Example 4 | |
|---|---|---|---|---|---|---|
| Reaction Component | | Charge (grams) | Reaction Component | Charge (grams) | Reaction Component | Charge (grams) |
| | Monomer Parts | 100 g total | Monomer Parts | 100 g total | Monomer Parts | 100 g total |
| Styrene | | 62.70 | Styrene | 41.50 | Styrene | 49.70 |
| Butadiene | | 34.80 | Butadiene | 56.00 | Butadiene | 47.80 |
| Acrylamide | | 2.50 | Acrylamide | 2.50 | Methyl methacrylate | 2.50 |
| Styrene/Butadiene Ratio | | 64:36 | Styrene/Butadiene Ratio | 43:57 | Styrene/Butadiene Ratio | 51:49 |
| | Volatile Parts | 106 g total | Volatile Parts | 106 g total | Volatile Parts | 106 g total |
| | Water | 106 | Water | 106 | Water | 106 |
| Non-polymerizable Parts | | 4.04 g total | 3. Non-polymerizable Parts | 4.04 g total | 3. Non-polymerizable Parts | 4.04 g total |
| Surfactant | | 2.75 | Surfactant | 2.75 | Surfactant | 2.75 |
| Trilon BX | | 0.02 | Trilon BX | 0.02 | Trilon BX | 0.02 |
| Sodium Persulfate | | 1.15 | Sodium Persulfate | 1.15 | Sodium Persulfate | 1.15 |
| Tetrasodium pyrophosphate | | 0.12 | Tetrasodium pyrophosphate | 0.12 | Tetrasodium pyrophosphate | 0.12 |
| Polystyrene seed latex | | 0.63 g Total | 4. Polystyrene seed latex | 0.63 g Total | 4. Polystyrene seed latex | 0.63 g Total |
| Total Parts | | 210.67 g | Total Parts | 210.67 g | Total Parts | 210.67 g |
| Theoretical solids | | 49.68% | Theoretical solids | 49.68% | Theoretical solids | 49.68% |

| | | | | | | |
|---|---|---|---|---|---|---|
| g = grams | | | | | | |

### Preparation of asphalt emulsions

A cationic styrene-butadiene latex composition was prepared by mixing a cationic surfactant solution, such as a fatty amine derivative at a pH of 1-3, with a styrene-butadiene latex. The styrene-butadiene latex did not contain a "flipping" cationic surfactant, i.e., a cationic surfactant that would impart a cationic charge to the latex prior to blending the latex with the cationic surfactant solution. Optionally, the styrene-butadiene latex contains a cationic surfactant and it is 'flipped' with hydrochloric acid to impart a cationic charge to the latex before it is blended with the cationic surfactant solution. The cationic surfactant solution comprising the latex composition and molten asphalt were pumped into a colloid mill where high shear mixing produces an asphalt emulsion having asphalt droplets dispersed in water. The polymer amount is 3 wt% based on asphalt solids. Examples 5-8 were prepared and the viscosity and particle size of the asphalt emulsions were measured. The standard deviations were calculated.

### Example 5 - Inventive Asphalt Emulsion Preparation

| Product | Weight% | Specific Gravity (g/mL) | Volume % |
|---|---|---|---|
| Associated Asphalt PG 58-28 | 66.63 | 1.02 | 66.03 |
| Indulin AA-86 | 0.30 | 0.86 | 0.35 |
| HCl | 0.20 | 1.16 | 0.17 |
| Example 2 | 3.83 | 0.95 | 4.06 |
| Water | 28.52 | 1.00 | 28.83 |
| Total | 100.0 | 0.99 | 100.0 |
| | | | |
| Effective residue for viscosity | 66.6% | | |
| Rubber solids in latex | 47.60 % | | |

### Example 6 - Inventive Asphalt Emulsion Preparation

| Product | Weight% | Specific Gravity (g/mL) | Volume % |
|---|---|---|---|
| Associated Asphalt PG 58-28 | 66.63 | 1.02 | 66.04 |
| Indulin AA-86 | 0.30 | 0.86 | 0.35 |
| HCl | 0.20 | 1.16 | 0.17 |
| Example 3 | 3.83 | 0.95 | 4.06 |
| Water | 29.04 | 1.00 | 29.36 |
| Total | 100.0 | 0.99 | 100.0 |
| | | | |
| Effective residue for viscosity | 66.6% | | |
| Rubber solids in latex | 54.10 % | | |

### Example 7 - Inventive Asphalt Emulsion Preparation

| Product | Weight% | Specific Gravity (g/mL) | Volume % |
|---|---|---|---|
| Associated Asphalt PG 58-28 | 66.63 | 1.02 | 66.04 |
| Indulin AA-86 | 0.30 | 0.86 | 0.35 |
| HCl | 0.20 | 1.16 | 0.17 |
| Example 4 | 3.97 | 0.95 | 4.21 |
| Water | 28.9 | 1.00 | 29.22 |
| Total | 100.0 | 0.99 | 100.0 |
| | | | |
| Effective residue for viscosity | 66.6% | | |
| Rubber solids in latex | 52.20 % | | |

### Example 8 - Comparative Asphalt Emulsion Preparation

| Product | Weight% | Specific Gravity (g/mL) | Volume % |
|---|---|---|---|
| Associated Asphalt PG 58-28 | 66.63 | 1.02 | 66.06 |
| Indulin AA-86 | 0.30 | 0.86 | 0.35 |
| HCl | 0.20 | 1.16 | 0.17 |
| Commercial Cationic SBR | 3.22 | 0.95 | 3.42 |
| Water | 29.65 | 1.00 | 29.99 |
| Total | 100.0 | 0.99 | 100.0 |
| | | | |
| Effective residue for viscosity | 66.6% | | |
| Rubber solids in latex | 64.30 % | | |

Asphalt PG 58-28 or Paving Asphalt PG 58-28 is a Performance Graded (PG) asphalt derived from specially selected crude oils via carefully controlled refining processes. The first number of the PG designation specifies the maximum design temperature; the second specifies the minimum design temperature. A PG 58-28 asphalt, for example, meets the average 7-day maximum pavement design temperature of 58°C and the minimum design temperature of -28°C.

### Determination of particle sizes

The distribution of particle size is determined by quasi-elastic light scattering (QELS), also known as dynamic light scattering (DLS) according to ISO 13321:1996 standard. The determination was carried out using High-Performance Particle Sizer (Malvern) at 22°C and a wavelength of 633 nm. For this purpose, a sample of the aqueous polymer dispersion is diluted and the dilution is analyzed. In the context of DLS, the aqueous dilution may have a polymer concentration in the range from 0.001 to 0.5% by weight, depending on the particle size. For most purposes, a proper concentration will be 0.01% by weight. The reported particle size values in Table 1 are the z-average of the cumulant evaluation of the measured of the measured autocorrelation function. In Figure 1, CRS-2LM refers to Cationic Rapid Set Latex Modified where 2 refers to the viscosity range.

**Table 1. Particle size comparison between asphalt emulsions prepared from Example 2, Example 3, Example 4 and a commercial cationic SBR.**

| **Emulsion Particle Size** | **Example 5** | **Example 6** | **Example 7** | **Example 8** |
|---|---|---|---|---|
| **Non-carboxylated styrene-butadiene latex** | Example 2 | Example 3 | Example 4 | Commercial Cationic SBR |
| Particle Size, ave, microns | 14.40 | 18.35 | 11.50 | 6.43 |
| SD | 13.30 | 7.90 | 5.39 | 10.66 |

Table 1 and Figure 1 demonstrate that the emulsion droplet size is much narrower with the latex polymer modified asphalt compositions as compared to that of a commercial SBR latex modified asphalt emulsion.

### Penetration testing of asphalt emulsions

The asphalt emulsions prepared according to the methods described above were penetration tested according to the ASTM D-5 protocol. The residue was recovered by evaporation according to ASTM 6934. A measurement of the penetration of a standard needle into the recovered asphalt binder sample was made under the following conditions:
Load = 100 grams
Temperature = 25° C
Time = 5 seconds
The depth of penetration is measured in units of dmm. Neither Example 2 nor Example 3 comprise a cationic flipping surfactant prior to their blending with a cationic surfactant solution at low pH and co-milling with a molten asphalt in a mill under shear to produce an asphalt emulsion.

**Table 2. Penetration of asphalt emulsions comprising Example 2 and Example 3 compared to commercial cationic SBR.**

| **Penetration** | **Example 5** | **Example 6** | **Example 8** |
|---|---|---|---|
| Pen 25°C | 82 | 93 | 86 |
| Pen 25°C | 81 | 91 | 88 |
| Pen 25°C | 81 | 93 | 88 |
| AVG | 81.3 | 92.3 | 89.3 |

Table 2 shows higher penetration for the asphalt emulsion modified with Example 3 (Example 6) compared to the residue from the emulsion modified with the commercial cationic SBR latex. For the Example 2 (Example 5) modified asphalt residue, penetration is lower than of the emulsion modified with the commercial cationic SBR latex. Penetration testing is used as a measure of consistency with higher values indicating softer consistency. It was surprisingly found that the addition of the latex polymer Example 3 (Example 6) resulted in softer consistency for the asphalt emulsion compared to that modified with the commercial cationic SBR latex. Softer consistency is advantageous for reasons of ductility and temperature susceptibility.

### Sweep testing asphalt emulsions

The ASTM D-7000 Standard Test Method for Sweep Test of Bituminous Emulsion Surface Treatment Samples was used to evaluate the emulsions prepared according to the methods described above. This test method measures the curing performance characteristics of bituminous emulsion and aggregates by simulating the brooming of a surface treatment in the laboratory.

**Table 3. Sweep testing asphalt emulsions compared to commercial cationic SBR.**

| **Sweep Testing - 35 °C / 2 hours** | **Example 5** | **Example 6** | **Example 7** | **Example 8** |
|---|---|---|---|---|
| **Non-carboxylated styrene-butadiene latex** | **Example 2** | **Example 3** | **Example 4** | **Commercial Cationic SBR** |
| ASTM D-7000 mod. % loss | 7.3 | 7.2 | 5.8 | 13.7 |

Table 3 shows that asphalt emulsions modified with the non-carboxylated styrene-butadiene latexes Example 2 and Example 3 and the non-carboxylated-styrene-butadiene-methyl methacrylate latex Example 4, that do not comprise a flipping surfactant, have better sweep performance than the commercial cationic SBR latex modified asphalt emulsion.

The compositions and methods of the appended claims are not limited in scope by the specific compositions and methods described herein, which are intended as illustrations of a few aspects of the claims and any compositions and methods that are functionally equivalent are intended to fall within the scope of the claims. Various modifications of the compositions and methods in addition to those shown and described herein are intended to fall within the scope of the appended claims. Further, while only certain representative compositions and method steps disclosed herein are specifically described, other combinations of the compositions and method steps also are intended to fall within the scope of the appended claims, even if not specifically recited. Thus, a combination of steps, elements, components, or constituents may be explicitly mentioned herein or less, however, other combinations of steps, elements, components, and constituents are included, even though not explicitly stated. The term "comprising" and variations thereof as used herein is used synonymously with the term "including" and variations thereof and are open, non-limiting terms. Although the terms "comprising" and "including" have been used herein to describe various embodiments, the terms "consisting essentially of" and "consisting of" can be used in place of "comprising" and "including" to provide for more specific embodiments of the invention and are also disclosed. Other than in the examples, or where otherwise noted, all numbers expressing quantities of ingredients, reaction conditions, and so forth used in the specification and claims are to be understood at the very least, and not as an attempt to limit the application of the doctrine of equivalents to the scope of the claims, to be construed in light of the number of significant digits and ordinary rounding approaches.

The present invention is further supported by the following items:
Item 1: An asphalt emulsion composition comprising:
   (i) asphalt,
   (ii) a non-carboxylated latex,
   (iii) less than 10 wt.% of a flipping surfactant based on the total weight of the composition, and
   (iv) optionally water.
Item 2: The composition of item 1, wherein the non-carboxylated latex comprises a styrene-butadiene copolymer.
Item 3: The composition of item 1, wherein the non-carboxylated latex comprises a styrene-butadiene-acrylate terpolymer.
Item 4: The composition of item 1, wherein the non-carboxylated latex copolymer comprises a styrene-butadiene-acrylonitrile copolymer.
Item 5: The composition of item 1, wherein the non-carboxylated latex comprises a styrene-butadiene-acrylamide copolymer.
Item 6: The composition of item 1, wherein the non-carboxylated latex copolymer comprises a styrene-butadiene-acrylate-acrylonitrile copolymer.
Item 7: The composition of item 1, wherein the non-carboxylated latex comprises a styrene butadiene latex that is a blend of a styrene-butadiene latex polymerized at a high polymerization temperature and a styrene-butadiene latex polymerized at a low polymerization temperature.
Item 8: The composition of item 7, wherein the high polymerization temperature is from 40 to 100°C and the low polymerization temperature is from -5°C to 40°C.
Item 9: The asphalt composition of item 1, wherein the non-carboxylated latex contains no flipping surfactant.
Item 10: The asphalt composition of item 1, wherein the non-carboxylated latex contains no cationic flipping surfactant.
Item 11: The asphalt composition of item 1, wherein the non-carboxylated latex results in no coagulum when in a blend with a cationic surfactant in preparation of polymer-modified cationic asphalt emulsions.
Item 12: The asphalt composition of item 1, wherein the non-carboxylated latex results in no coagulum when in a blend with an anionic surfactant in preparation of polymer-modified anionic asphalt emulsions.
Item 13: The composition of any of items 1 to 12, wherein the styrene to butadiene ratio is in the range of from 80/20 to 20/80 based on weight.
Item 14: The composition of any of items 1 to 13, wherein the styrene to butadiene ratio is 25/75 based on weight.
Item 15: The composition of any of items 1 to 14, wherein the styrene to butadiene ratio is 50/50 based on weight.
Item 16: The composition of any of items 1 to 15, wherein the latex solids are in the range of 30 to 75 wt.% based on the total weight of the composition.
Item 17: A method of forming the composition of item 1 comprising contacting a non-carboxylated latex, asphalt, and a cationic surfactant solution to form an asphalt emulsion.
Item 18: The method of item 17, wherein the non-carboxylated latex, asphalt, and a cationic surfactant solution are co-milled in a colloid high shear mill to form a cationic asphalt emulsion.
Item 19: The method of item 17, wherein the non-carboxylated latex is post-added, to a cationic asphalt emulsion.
Item 20: A method of forming the composition of item 1 comprising contacting a non-carboxylated latex, asphalt, and an anionic surfactant solution to form an asphalt emulsion.
Item 21: The method of item 20, wherein the non-carboxylated latex, asphalt, and an anionic surfactant solution are co-milled in a colloid high shear mill to form an anionic asphalt emulsion.
Item 22: The method of item 30, wherein the non-carboxylated latex is post-added, to an anionic asphalt emulsion
Item 23: A method of forming the composition of item 1, comprising, contacting a non-carboxylated latex, asphalt, and a non-ionic surfactant solution to form an asphalt emulsion
Item 24: The method of item 23, wherein the non-carboxylated latex, asphalt, and a non-ionic surfactant solution are co-milled in a colloid high shear mill to form a non-ionic asphalt emulsion.
Item 25: The method of item 23, wherein the non-carboxylated latex is post-added, to a non-ionic asphalt emulsion
Item 26: A tack coat comprising the asphalt composition of any of items 1 to 16.
Item 27: A fog seal comprising the asphalt composition of any of items 1 to 16.
Item 28: A chip seal comprising the asphalt composition of any of items 1 to 16.
Item 29: A paving asphalt comprising the asphalt composition of any of items 1 to 16.
Item 30: An asphalt emulsion composition of items 1 to 13 for use in waterproofing, roofing, paints, coatings, paper bindings or coatings, foams, adhesives, powders and carpet applications.
Item 31: A styrene-butadiene latex made by emulsion polymerization, wherein the latex is cold-polymerized.
Item 32: A styrene-butadiene latex made by emulsion polymerization, wherein the latex is hot-polymerized.
Item 33: A hot-mix asphalt composition comprising the styrene-butadiene copolymer latex according to any one of items 31 to 32.
Item 34: The hot mix asphalt emulsion composition of item 33, wherein the particle size of the styrene-butadiene copolymer latex is less than 200 nm.
Item 35: An asphalt emulsion composition comprising the styrene-butadiene copolymer latex according to any one of items 31 to 32.
Item 36: The asphalt emulsion composition of item 35, wherein the particle size of the styrene-butadiene copolymer latex is less than 200 nm.

## Claims

1. An asphalt emulsion composition comprising:
(i) asphalt,
(ii) a non-carboxylated latex,
(iii) less than 10 wt.% of a flipping surfactant based on the total weight of the composition, and
(iv) optionally water.

2. The composition of claim **1,** wherein the non-carboxylated latex comprises a styrene-butadiene copolymer; or
wherein the non-carboxylated latex comprises a styrene-butadiene-acrylate terpolymer; or
wherein the non-carboxylated latex copolymer comprises a styrene-butadiene-acrylonitrile copolymer; or
wherein the non-carboxylated latex comprises a styrene-butadiene-acrylamide copolymer; or
wherein the non-carboxylated latex copolymer comprises a styrene-butadiene-acrylate-acrylonitrile copolymer.

3. The composition of claim **1,** wherein the non-carboxylated latex comprises a styrene butadiene latex that is a blend of a styrene-butadiene latex polymerized at a high polymerization temperature and a styrene-butadiene latex polymerized at a low polymerization temperature, and
wherein *preferably* the high polymerization temperature is from 40 to 100°C and the low polymerization temperature is from -5°C to 40°C.

4. The asphalt composition of claim 1, wherein the non-carboxylated latex contains no flipping surfactant; or
wherein the non-carboxylated latex contains no cationic flipping surfactant.

5. The asphalt composition of claim 1, wherein the non-carboxylated latex results in no coagulum when in a blend with a cationic surfactant in preparation of polymer-modified cationic asphalt emulsions; or
wherein the non-carboxylated latex results in no coagulum when in a blend with an anionic surfactant in preparation of polymer-modified anionic asphalt emulsions.

6. The composition of any one of claims 1 to 5, wherein the styrene to butadiene ratio is in the range of from 80/20 to 20/80 based on weight; and/or
wherein the styrene to butadiene ratio is 25/75 based on weight; and/or
wherein the styrene to butadiene ratio is 50/50 based on weight; and/or
wherein the latex solids are in the range of 30 to 75 wt.% based on the total weight of the composition.

7. The composition of claim 2, wherein the non-carboxylated latex is a styrene-butadiene latex made by emulsion polymerization, wherein the latex is cold-polymerized; or
wherein the non-carboxylated latex is a styrene-butadiene latex made by emulsion polymerization, wherein the latex is hot-polymerized.

8. The composition of claim 7, wherein the particle size of the styrene-butadiene latex is less than 200 nm.

9. A method of forming the composition of claim 1 comprising contacting a non-carboxylated latex, asphalt, and a cationic surfactant solution to form an asphalt emulsion

10. The method of claim 9, wherein the non-carboxylated latex, asphalt, and a cationic surfactant solution are co-milled in a colloid high shear mill to form a cationic asphalt emulsion; or
wherein the non-carboxylated latex is post-added, to a cationic asphalt emulsion.

11. A method of forming the composition of claim 1 comprising contacting a non-carboxylated latex, asphalt, and an anionic surfactant solution to form an asphalt emulsion.

12. The method of claim 11, wherein the non-carboxylated latex, asphalt, and an anionic surfactant solution are co-milled in a colloid high shear mill to form an anionic asphalt emulsion; or
wherein the non-carboxylated latex is post-added, to an anionic asphalt emulsion.

13. A method of forming the composition of claim 1, comprising, contacting a non-carboxylated latex, asphalt, and a non-ionic surfactant solution to form an asphalt emulsion

14. The method of claim 13, wherein the non-carboxylated latex, asphalt, and a non-ionic surfactant solution are co-milled in a colloid high shear mill to form a non-ionic asphalt emulsion; or
wherein the non-carboxylated latex is post-added, to a non-ionic asphalt emulsion.

15. A tack coat, a fog seal, a chip seal or a paving asphalt comprising the asphalt composition of any one of claims 1 to 6.

16. Use of an asphalt emulsion composition of claims 1 to 6 for waterproofing, roofing, paints, coatings, paper bindings or coatings, foams, adhesives, powders and carpet applications.

17. A hot-mix asphalt composition comprising the styrene-butadiene copolymer latex according to claim 7.

18. The hot mix asphalt emulsion composition of claim 17, wherein the particle size of the styrene-butadiene copolymer latex is less than 200 nm.
